Europäisches Patentamt

(19) European Patent Office

Office européen des brevets

(11) Numéro de publication : **0 461 053 A1**

# (12) DEMANDE DE BREVET EUROPEEN

(21) Numéro de dépôt : **91420181.9**

(22) Date de dépôt : **07.06.91**

(51) Int. Cl.$^5$ : **B62M 9/12**

(30) Priorité : 07.06.90 FR 9007454

(43) Date de publication de la demande :
**11.12.91 Bulletin 91/50**

(84) Etats contractants désignés :
**DE ES GB IT**

(71) Demandeur : **SIMPLEX S.A.**
**Rue Jean Moulin B.P. No. 60 Z.I. Couchey**
**F-21160 Marsannay La Cote (FR)**

(72) Inventeur : **Thiberge Christophe,**
**46 Rue Chaudronnerie**
**F-21000 Dijon (FR)**

(74) Mandataire : **Dupuis, François et al**
**Cabinet Laurent et Charras, 3 Place de**
**l'Hôtel-de-Ville, BP 203**
**F-42005 St. Etienne Cédex 1 (FR)**

(54) **Ensemble support pour le montage d'organes tournants.**

(57) L'ensemble est remarquable en ce qu'il est composé de deux flasques (2) et (3), présentant directement lors de leur fabrication, des moyens complémentaires (2a) (3a) et (2b) (3b) aptes à permettre, d'une part, le montage à libre rotation d'une manière rapportée des organes tournants (1) et, d'autre part, l'accouplement desdits flasques (2) et (3).

FIG.1

EP 0 461 053 A1

Plus particulièrement, l'invention concerne un ensemble support pour le montage d'un train de galets d'un dérailleur pour bicyclettes.

Généralement, un tel ensemble qui constitue un bras enrouleur et tendeur de la chaîne, présente deux galets dentés montés à rotation libre entre deux flasques. A cet effet, les galets sont montés sur des axes rapportés, fixés par des moyens d'assemblage également rapportés, entre les deux flasques. En outre, dans l'application aux changements de vitesse, l'ensemble support des galets est assujetti à un ressort de rappel pour maintenir la chaîne suffisamment tendue quel que soit son positionnement sur le pignon considéré de la roue libre.

Un tel ensemble comprend un nombre important de pièces distinctes qu'il est nécessaire de fabriquer séparemment, puis d'assembler. On conçoit que ce nombre de pièces et le temps de montage nécessaire, engendrent un coût de fabrication élevé.

Pour tenter de remédier à ces inconvénients, on a proposé une solution telle que divulguée par l'enseignement du brevet EP-A-156089, dont le demandeur de la présente est également titulaire. Pour l'essentiel, ce brevet fait état d'un ensemble composé d'un premier flasque en matière plastique présentant des portées circulaires en bout desquelles sont formées directement les galets. Un deuxième flasque, également en matière plastique, présente des portées complémentaires creuses destinées à être engagées sur les portées de l'autre flasque en provoquant, au moment de l'assemblage, la rupture des parties d'attache des galets.

Cette solution n'est cependant pas satisfaisante. Chacune des pièces constitutives, à savoir essentiellement les deux flasques, sont difficiles à obtenir et nécessitent des moules très spéciaux d'un coût très élevé. Par ailleurs, le résultat obtenu n'est pas satisfaisant.

En effet, étant donné que les galets et les portées circulaires constituent un ensemble monobloc, il apparait nécessairement, après rupture des parties d'attache desdits galets, des aspérités. De telles aspérités peuvent nuire au bon fonctionnement de la rotation des galets.

Compte-tenu de cette conception, un tel ensemble ne constitue pas une solution applicable dans l'industrie et ne peut être envisagé favorablement pour l'exécution d'un bras tendeur de changement de vitesse, compte-tenu de la précision et de la fiabilité recherchée avec ce type de produit.

L'invention s'est fixée pour but de remédier à ces inconvénients, d'une manière sûre et efficace.

Le problème que se propose de résoudre l'invention, est de diminuer au maximum le nombre de pièces de l'ensemble support, en ayant pour objectif de rationnaliser sa fabrication, d'une manière simple, efficace et industrielle, tout en ayant une très bonne qualité de fonctionnement, pour une application de l'ensemble à un dérailleur de bicyclette.

Un tel problème est résolu en ce que l'ensemble est composé de deux flasques présentant directement lors de leur fabrication, des moyens complémentaires aptes à permettre, d'une part, le montage à libre rotation d'une manière rapportée des organes tournants et, d'autre part, l'accouplement desdits flasques.

Il apparait donc que l'ensemble, selon l'invention, se compose seulement de trois pièces principales et distinctes, à savoir deux flasques et un jeu d'organes tournants, notamment un jeu de galets.

Pour résoudre le problème posé de trouver une solution simple et efficace, au niveau du fonctionnement, les moyens sont constitués par des portées circulaires formées en débordement de l'une des faces de l'un des flasques pour recevoir à libre rotation, les organes tournants, l'extrémité libre desdites portées coopérant avec des ouvertures complémentaires formées dans l'épaisseur de l'autre flasque pour y être fixées.

Après engagement de l'extrémité de chacune des portées circulaires dans l'ouverture correspondante, cette dernière est rivetée.

Dans le cas d'une application de l'ensemble support selon les caractéristiques de l'invention, à des galets d'enroulement pour constituer un bras tendeur d'un changement de vitesses, l'un des flasques présente des agencements pour le montage avec capacité de pivotement angulaire limité et de rappel en position de l'ensemble du corps du dérailleur.

Un autre problème que se propose d'assurer l'invention est d'assurer un meilleur guidage pour le pivotement de l'ensemble du dérailleur.

Un tel problème est résolu en ce que les agencements sont constitués par une cheminée pour le montage pivotant de l'ensemble du dérailleur, ladite cheminée présentant un chambrage interne conformé pour le logement et le blocage angulaire de l'organe de rappel du dérailleur.

Pour résoudre le problème posé de limiter angulairement le pivotement du dérailleur, la cheminée présente en débordement une patte faisant office de butée et apte à coopérer avec une partie de l'ensemble du dérailleur sous l'effet de détente du ressort de rappel.

Pour résoudre le problème posé de rationnaliser la fabrication en diminuant d'une manière importante le nombre de pièces, tout en ayant pour objectif d'avoir un fonctionnement sûr et efficace, les moyens et agencements de chacun des flasques, sont formés directement lors de la fabrication desdits flasques.

Avantageusement, les flasques et leurs moyens et agencements sont obtenus directement par emboutissage, moulage ou injection.

L'invention est exposée ci-après plus en détail à l'aide des dessins annexés, dans lesquels:

La figure 1 montre par une vue en perspective les principaux éléments de l'ensemble support représentés avant montage.

La figure 2 est une vue extérieure de face de l'un des flasques de l'ensemble support.

La figure 3 est une vue extérieure de face de l'autre flasque de l'ensemble support.

La figure 4 est une vue en coupe longitudinale montrant l'ensemble support après assemblage de ses différents éléments constitutifs.

La figure 5 est une vue partielle en coupe montrant un exemple de fixation d'une partie d'un dérailleur arrière de bicyclette sur l'un des flasques support selon l'invention.

La figure 6 est une vue en coupe transversale considérée selon la ligne 6-6 de la figure 5.

L'ensemble support selon l'invention, décrit dans la suite de la description et illustré aux figures des dessins, s'applique avantageusement mais non limitativement pour le montage des galets d'enroulement (1) d'une chaîne de dérailleur arrière de bicyclette. Sans pour cela sortir du cadre de l'invention, cet ensemble support peut s'appliquer pour le montage de tout type d'organes tournants pour d'autres applications.

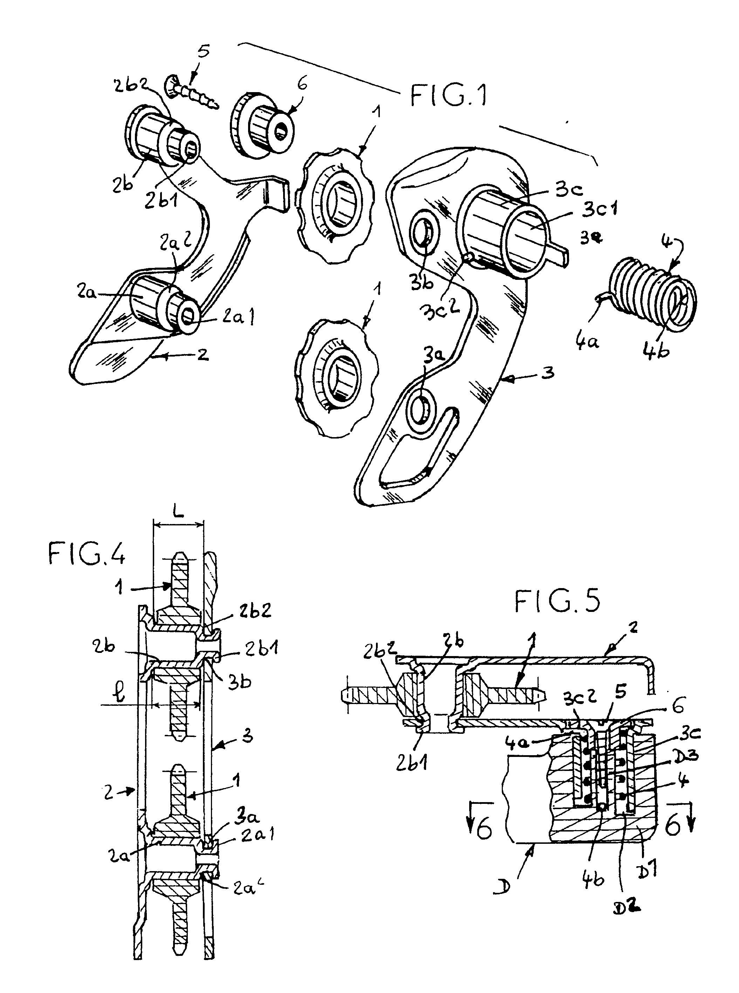

Comme le montre la figure 1, l'ensemble support est composé de deux flasques (2 et 3) présentant directement lors de leur fabrication, des moyens complémentaires (2a-3a) et (2b-3b) aptes à assurer le montage tournant des galets (1) et l'accouplement desdits flasques (2) et (3). Les moyens (2a-2b) sont respectivement constitués par des portées circulaires formées en débordement de la face interne du flasque (2) par exemple. Les moyens complémentaires (3a-3b) sont constitués par des trous ou ouvertures formés dans l'épaisseur de l'autre flasque (3) en étant conformés pour permettre l'engagement des extrémités des portées circulaires (2a-2b). L'extrémité libre (2a1 et 2b1) de chacune des portées (2a et 2b) est de diamètre réduit égal ou sensiblement égal au diamètre des trous ou ouvertures (3a et 3b).

Selon l'invention, compte-tenu de la conception de l'ensemble support, il suffit d'engager chacun des galets (1) sur les portées circulaires correspondantes (2a et 2b) du flasque (2) puis d'engager les extrémités libres (2a1-2b1) dans les orifices (3a) et (3b) de l'autre flasque (3). A noter que la longueur (L) des portées circulaires (2a et 2b) recevant les galets est égale ou très légèrement supérieure à la largeur (l) de chacun des galets pour permettre leur montage avec le jeu latéral fonctionnel nécessaire.

En effet, après engagement des extrémités libres (2a1-2b1) dans les orifices (3a-3b), le flasque (3) est en butée contre l'épaulement circulaire (2a2-2b2) de chacune des portées (2a-2b) (figure 4).

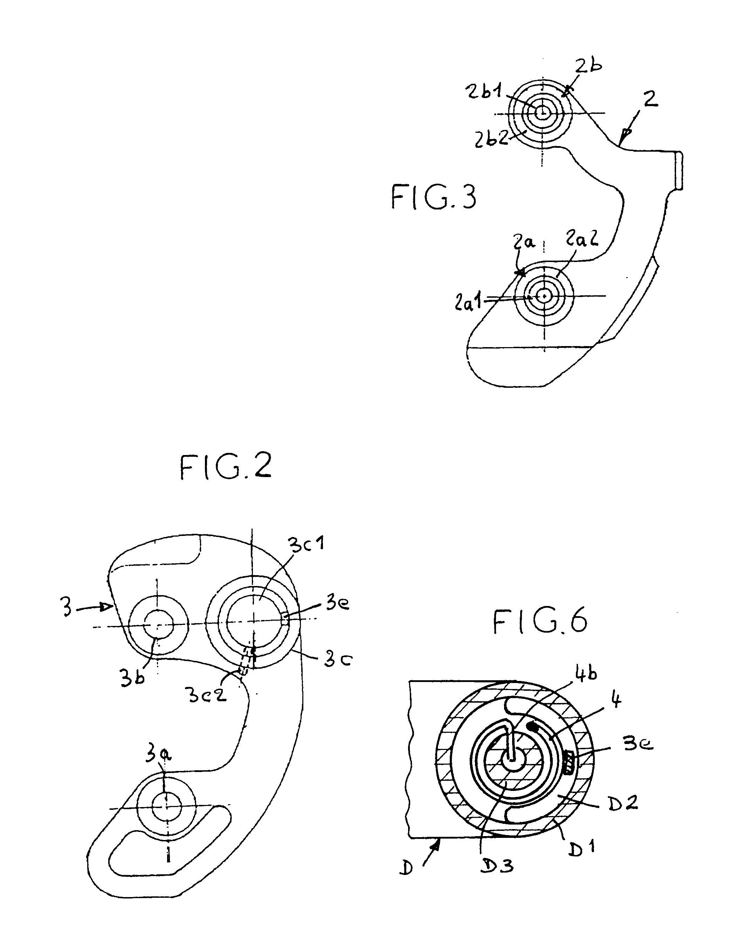

De manière préférée, pour assurer l'accouplement des deux flasques (2 et 3) et par conséquent le blocage en translation des galets, on effectue le rivetage de la partie des extrémités (2a1-2b1) débordant du flasque (3) (figures 4 et 6).

Suivant une autre caractéristique, et dans le cas d'une application de l'ensemble support à un dérailleur arrière de bicyclette, l'un des flasques (3) présente des agencements pour le montage avec capacité de pivotement angulaire limité et de rappel en position, de l'ensemble du corps du dérailleur désigné dans son ensemble par (D). A cet effet, la face externe du flasque (3) présente une cheminée (3c) sur laquelle peut être engagée, à libre rotation, la partie correspondante (D1) du dérailleur (D). Cette cheminée (3c), qui fait office d'axe de rotation, présente un chambrage interne (3c1) pour le logement et le blocage angulaire de l'organe de rappel du dérailleur sous forme d'un ressort (4) notamment.

Pour assurer le blocage angulaire du ressort de rappel (4), l'un de ses brins (4a), est engagé dans un trou ou lumière (3c2), formé dans le fond de la cheminée (3c). A noter que la cheminée (3c) peut présenter plusieurs troux (3c2) ou autres agencements pour permettre un choix au niveau du positionnement angulaire du ressort de rappel (4). D'une manière connue, l'autre extrémité libre (4b) du ressort coopère avec un logement formé dans le fond du trou borgne (D3) de la partie du dérailleur recevant la cheminée (3c). La fixation, à ce niveau du dérailleur, s'effectue par exemple au moyen d'une vis (5) engagée dans un bossage cylindrique (D4) formé coaxialement en débordement du fond du trou (D3) recevant la cheminée (3c) et le ressort (4). En outre, la vis (5) coopère avec un bouchon (6) apte à obturer l'ouverture de la cheminée en étant conformé pour coiffer une partie du bossage coaxial (D4).

Ce mode de fixation du dérailleur sur le flasque correspondant, constitue une forme de réalisation préférée quine saurait toutefois être considérée comme limitative.

Suivant une autre caractéristique, l'extrémité libre de la cheminée présente en débordement de ses génératrices, une patte (3e) faisant office de butée et apte à coopérer avec une partie de l'ensemble du dérailleur, sous l'effet de détente du ressort de rappel (4). Par exemple, cette patte (3e) coopère avec une lumière (D2) formée dans le fond du logement de la partie du dérailleur recevant la cheminée (3c) (figure 6). A noter que cette lumière peut être semicirculaire, de longueur d'arc plus ou moins important, en fonction de la tension de la chaîne et de la rotation du train de galets.

Bien évidemment, chacun des flasques (2 et 3) présente tout profil et tout agencement, compte-tenu de l'application envisagée de l'ensemble support, selon l'invention aux dérailleurs de bicyclettes.

On renvoie notamment aux figures 1, 2 et 3 des dessns annexés qui montrent une forme de réalisation préférée de chacun des deux flasques.

Suivant une autre caractéristique importante de l'invention, les différents moyens (2a-2b) (3a-3b) ainsi que les agencements (3c) de chacun des flasques sont formés directement lors de la fabrication de ces derniers.

Avantageusement, les flasques (2) et (3), ainsi que les portées circulaires (2a-2b) et la cheminée (3c) sont obtenus directement par emboutissage, moulage ou injection. Par exemple, chacun des flasques est obtenu par emboutissage d'un matériau en alliage léger, sans pour cela exclure d'autres matières tel que l'acier.

D'une manière connue, les galets (1) sont exécutés en matériaux composites, en résine armée, en matière plastique ou en matériaux similaires.

Les avantages ressortent bien de la description, notamment il apparait que l'ensemble support pour l'enroulement de la chaîne et d'un dérailleur arrière, est composé seulement de trois types différents de pièces, à savoir:

– un flasque (2)
– un flasque (3)
– un jeu de galets (1)

Enfin, on souligne et on rappelle, que de telles dispositions permettent de rationnaliser la fabrication et d'obtenir un fonctionnement sûr et efficace, compatible à une application à des bicyclettes.

## Revendications

-1- Ensemble support pour le montage d'organes tournants (1) notamment de galets d'enroulement de chaîne d'un dérailleur de bicyclettes, caractérisé en ce qu'il est composé de deux flasques (2) et (3), présentant directement lors de leur fabrication, des moyens complémentaires (2a) (3a) et (2b) (3b) aptes à permettre, d'une part, le montage à libre rotation d'une manière rapportée des organes tournants (1) et, d'autre part, l'accouplement desdits flasques (2) et (3).

-2- Ensemble selon la revendication 1, caractérisé en ce que les moyens sont constitués par des portées circulaires (2a-2b) formées en débordement de l'une des faces de l'un des flasques (2) pour recevoir à libre rotation, les organes tournants (1), l'extrémité libre desdites portées coopérant avec des ouvertures complémentaires (3a-3b) formées dans l'épaisseur de l'autre flasque (2) pour y être fixées.

-3- Ensemble selon la revendication 2, caractérisé en ce qu'après engagement de l'extrémité (2a1-2b1) de chacune des portées circulaires (2a-2b) dans l'ouverture correspondante (3a-3b), cette dernière est rivetée.

-4- Ensemble selon la revendication 1, caractérisé en ce que l'un des flasques (3) présente des agencements (3c) pour le montage avec capacité de pivotement angulaire limité et de rappel en position de l'ensemble du corps du dérailleur (D).

-5- Ensemble selon la revendication 4, caractérisé en ce que les agencements sont constitués par une cheminée (3c) pour le montage pivotant de l'ensemble du dérailleur, ladite cheminée présentant un chambrage (3c1) interne conformé pour le logement et le blocage angulaire de l'organe de rappel (4) du dérailleur (D).

-6- Ensemble selon la revendication 5, caractérisé en ce que la cheminée (3c) présente en débordement une patte (3e) faisant office de butée et apte à coopérer avec une partie de l'ensemble du dérailleur sous l'effet de détente du ressort de rappel.

-7- Ensemble selon l'une quelconque des revendications 1 à 6, caractérisé en ce que les moyens et agencements de chacun des flasques (2 et 3), sont formés directement lors de la fabrication desdits flasques (8).

-8- Ensemble selon la revendication 7, caractérisé en ce que les flasques (2 et 3) et leurs moyens et agencements (2a, 2b, 3a, 3b, 3c), sont obtenus directement par emboutissage, moulage ou injection.

FIG.1

FIG.4

FIG.5

FIG.3

FIG.2

FIG.6

Office européen
des brevets

RAPPORT DE RECHERCHE EUROPEENNE

Numero de la demande

EP  91 42 0181

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,X | EP-A-0 156 089 (LE SIMPLEX) * Page 1, ligne 26 - page 2, ligne 19; figures 1,3 * | 1 | B 62 M    9/12 |
| A | | 2,7,8 | |
| A | FR-A-2 286 748 (SHIMANO) * Page 5, ligne 13 - page 5, ligne 27; figures 2-4 * | 1,2,4-8 | |
| A | GB-A-  628 461 (RICHLI) * Page 1, ligne 73 - page 1, ligne 88; figure 2 * | 3 | |
| A | EP-A-0 163 583 (LE SIMPLEX) * Abrégé; figure 3 * | 4-6 | |
| A | US-A-4 259 873 (NAGANO) * Colonne 2, ligne 54 - colonne 2, ligne 62; figures 2,7 * | 4-6 | |

DOMAINES TECHNIQUES RECHERCHES (Int. Cl.5)

B 62 M

Le présent rapport a été établi pour toutes les revendications

| Lieu de la recherche | Date d'achèvement de la recherche | Examinateur |
|---|---|---|
| LA HAYE | 12-09-1991 | DENICOLAI G. |

CATEGORIE DES DOCUMENTS CITES

X : particulièrement pertinent a lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

FPO FORM 1503 03.82 (P0402)